# EUROPÄISCHE PATENTANMELDUNG

(11) **EP 2 103 217 A2**
(43) Veröffentlichungstag der Anmeldung: **23.09.2009**
(21) Anmeldenummer: 09155269.5
(22) Anmeldetag: 16.03.2009
(51) Int. Cl.: A21C 3/02

(54) **Teig-Querstrecksystem**

(30) Priorität: 19.03.2008 DE 102008000763
(71) Anmelder: Fritsch GmbH, 97348 Markt Einersheim (DE)
(72) Erfinder: Hoos, Josef, 97348, Markt Einersheim (DE); Bernhardt, Udo, 97346 Iphofen (DE)
(74) Vertreter: Götz, Georg Alois

(57) **Zusammenfassung**

Vorrichtung (1) zur maschinellen Teigverarbeitung mit einer Querspreizeinrichtung, ausgebildet mit einem oder mehreren Querspreizmitteln sowie einem oder mehreren, diesen gegenüberliegend angeordneten Gegenhaltmitteln zum maschinellen Querspreizen beziehungsweise -strecken eines Teigbandes (5) bezüglich einer Förderrichtung des Teigbandes (5), wobei das oder die Gegenhaltmittel der Querspreizeinrichtung ein oder mehrere Mittel zum maschinellen Längsspreizen oder Längsstrecken des Teigbandes (5) umfassen.

## Beschreibung

Die Erfindung betrifft eine Vorrichtung zur maschinellen Teigverarbeitung mit einer mit einer Druckwalze sowie einer dieser gegenüberliegend angeordneten Gegenwalze ausgebildeten Querspreizeinrichtung zum maschinellen Querspreizen eines Teigbands bezüglich einer Förderrichtung des Teigbandes sowie ein zugehöriges Verfahren.

Im Bereich der maschinellen Teigverarbeitung ist es bekannt, Querspreizeinrichtungen zu verwenden, um Teigbänder, die auf einer Beförderungseinrichtung die jeweilige Maschine durchlaufen, quer zu ihrer Laufrichtung zu spreizen, sie also gleichsam in die Breite zu strecken.

Ein Beispiel für eine derartige Querspreizeinrichtung bzw. ein Querwalzwerk ist die in der DE 32 38 388 C2 beschriebene Vorrichtung zum Breitstrecken eines Teigband-Rohstückes, bei der eine als Schneckenwalze ausgebildete Druckwalze an dem Teigband durch ihre Rotation einen sich wiederholenden, von der Teigbandmitte zu den Teigbandrändern hin wandernden Eindruck verursacht. Der Schneckenwalze gegenüberliegend ist eine glatte Gegenwalze angeordnet.

Oft ist es erforderlich oder erwünscht, Teigbänder nicht nur in einer Richtung quer bzw. schräg zu ihrer Beförderungsrichtung zu spreizen, sondern auch in Längsrichtung, also in der Richtung des Teigtransports, wozu aus dem Stand der Technik verschiedene Längsspreizeinrichtungen bekannt sind. Soll nun ein Teigband sowohl in Längs- als auch in Querrichtung gestreckt werden, so werden eine Längs- und eine Querspreizeinrichtung hintereinander angeordnet, so zum Beispiel beim kombinierten Quer- und Längswalzwerk der DE 202 12 725 U1, bei dem das Längswalzwerk in Förderrichtung einem Querwalzwerk nachgeordnet ist, wobei die Teigwalzmittel an einem gemeinsamen Rahmen gelagert sind.

Des Weiteren ist es aus der DE 102 42 576 B4 sowie der EP 1 111 997 B1 bekannt, im Sinne einer schonenden und flexiblen Teigbearbeitung als Teigwalzen Satellitenkopfsysteme mit einer aus mehreren Satellitenwalzen gebildeten Walzengruppe zu verwenden. Mit derartigen Satellitenkopfanordnungen kann gegebenenfalls ein Längsspreizen eines Teigbandes erreicht werden. Dazu wird auch auf US 4 276 317 und EP-B-0 311 240 verwiesen.

Dadurch, dass bei bisher bekannten Vorrichtungen zur maschinellen Teigverarbeitung, die sowohl eine Querwalzeinrichtung als auch eine Längswalzeinrichtung aufweisen, diese beiden Einrichtungen als separate Walzwerke nacheinander angeordnet sind, ist der Platzbedarf derartiger Vorrichtungen beträchtlich. Beispielsweise führt das Anordnen eines Satellitenkopfsystems zum Längswalzen eines Teigbandes und eines separaten Querwalzwerks nach dem Satellitenkopf zu einer Vorrichtungslänge, die für viele Bäckereien bereits als problematisch zu bezeichnen ist.

Die erst am 03.04.2008 offen gelegte DE 10 2006 046 501 A1 betrifft eine Vorrichtung zur Herstellung eines Teigbandes aus einem Roh-Teigband sowie ein Set aus Planetenwalzen zum Einsatz in einer derartigen Vorrichtung, wobei eine Unter- und Oberdrückeinrichtung mit einem Bearbeitungszwischenraum für das Teigband vorgesehen sind. Mittels solcher Einrichtungen lässt sich aber keine kontrollierte Querspreizung erzielen. Durch eine unkontrollierte Pressung, die nicht als Spreizung im eigentlichen Sinne zu betrachten ist, wird höchstens eine betragsmäßig kleine Änderung der Maße des Teigbands erzielt. Eine steuerbare Kraftwirkung quer zur Laufrichtung ist nicht gegeben.

Die DE 102 90 837 T1 betrifft eine Vorrichtung und ein Verfahren zum Ausbreiten von Lebensmittelteig. Dabei gibt es einen unteren Rahmen mit einem Lebensmittel-fördernden Element und einen oberen Rahmen, in dem sich eine Ansammlung einer Vielzahl von auswalzenden Rollen befindet. Die Rollen können den Lebensmittelteig vibrieren. Bei der Vorrichtung und dem Verfahren zum Kneten und Ausrollen eines Nahrungsmittelteigstreifens der AT 502 608 A1 wird ein Teigstreifen auf einer Förder- und Ausrollrolle gefördert. Da in diesem Stand der Technik insgesamt bzw. effektiv auf einem durchgehenden Förderband ausgerollt wird, wird der Teig aufgrund des Massendurchflussgesetzes auf dem Förderband verschoben. Ein Längswalzen ist aufgrund der Gleichheit von Zuführgeschwindigkeit und Auslaufgeschwindigkeit nicht möglich. Es ergibt sich eine Ausrollfläche, keine Ausrolllinie, und das Teigband wird über das Förderband geschoben. Durch die Reibung wird das Teigband gestresst. Eine kontrollierte Querspreizung ist so schwierig. Vibrationen können nur von oben erfolgen. Die Bauart erfordert ein Querwalzen in zwei Schritten, bei dem zuerst die eine, dann die andere Hälfte quergewalzt wird.

Der Erfindung liegt damit die Aufgabe zu Grunde, eine diesbezüglich verbesserte Vorrichtung sowie ein entsprechend verbessertes Verfahren zur maschinellen Teigverarbeitung anzugeben. Zur Lösung wird auf die beigefügten, unabhängigen Ansprüche verwiesen.

Die erfindungsgemäße Vorrichtung zur maschinellen Teigverarbeitung mit einer Querspreizeinrichtung, ausgebildet mit einem oder mehreren Querspreizmitteln sowie einem oder mehreren, diesen gegenüberliegend angeordneten Gegenhaltmitteln zum maschinellen Querspreizen beziehungsweise -strecken eines Teigbandes bezüglich einer Förderrichtung des Teigbandes, zeichnet sich dadurch aus, dass das oder die Gegenhaltmittel der Querspreizeinrichtung ein oder mehrere Mittel zum maschinellen Längsspreizen oder Längsstrecken des Teigbandes umfassen. Ergänzend kann die Vorrichtung ein oder mehrere Mittel zum Vibrieren des Teigbandes und/oder zum wiederholten mechanischen Drücken oder Schlagen des Teigbandes umfassen. Dabei ist im Rahmen der Erfindung mit Längs- bzw. Querspreizen stets ein kontrollierter bzw. kontrollierbarer Spreiz- und/oder Streckvorgang gemeint.

Auf der Basis der Erfindung ist insbesondere eine Vorrichtung zur maschinellen Teigverarbeitung mit einer mit einer Druckwalze sowie einer dieser gegenüberliegend angeordneten Gegenwalze ausgebildeten Querspreizeinrichtung zum maschinellen Querspreizen eines Teigbands bezüglich einer Förderrichtung des Teigbandes vorgesehen, die sich dadurch auszeichnet, dass die Gegenwalze der Querspreizeinrichtung als eine zum maschinellen Längsspreizen des Teigbandes geeignete Satellitenkopfanordnung mit mehreren Satellitenwalzen ausgebildet ist. Indem aufgrund der Satellitenwalzen das Teigband (im Zuge des oder) gleichzeitig mit dem Querstrecken(s) beziehungsweise Querwalzen(s) auch in Längsbeziehungsweise Förderrichtung gestreckt wird, während es mechanisch erteilten Vibrationen unterworfen wird, lässt sich im Teig ein thixotropischer Effekt erzielen und ein Zerstören oder Beschädigen der Teig-Glutennetzstruktur vermeiden oder wenigstens vermindern.

Bei der erfindungsgemäßen Vorrichtung ist also bei einem Querwalzwerk statt der herkömmlicherweise der Druckwalze gegenüberliegend angeordneten einfachen Gegenwalze ein Satellitenkopfsystem mit mehreren Satellitenwalzen vorgesehen, die ergänzend zur durch die Druckwalze erzeugten Verbreiterung des Teigbandes in einer Querrichtung ein Längspreizen des Teigbandes bewirken, also eine Verlängerung des Bandes in der Transportrichtung.

Dadurch wird erfindungsgemäß ein in einer Einheit integriertes Quer- und Längswalzwerk geschaffen, das es ermöglicht, das Quer- und Längswalzen eines Teigbandes in einem einzigen Vorgang bzw. Arbeitsschritt durchzuführen. Das Längsspreizen bzw. Querspreizen des Teigbandes bezüglich seiner Laufrichtung, also die auf kontrollierte Art und Weise erfolgende Änderung der Länge und Breite des Teigbands, kann mit Hilfe der erfindungsgemäßen Vorrichtung im Unterschied zu bisherigen Vorrichtungen simultan erfolgen.

Dabei bietet das erfindungsgemäße, in einer Einheit integrierte Quer- und Längswalzwerk den Vorteil, dass sich im Vergleich zu bisherigen aufeinander folgenden Anordnungen von Quer- und Längsspreizeinrichtungen eine wesentlich geringere Vorrichtungslänge realisieren lässt. Die Vorrichtung ist somit platzsparend, wobei zudem aufgrund des in einer einzigen Abwalzeinrichtung integrierten Abwalzens sowohl in Längs- als auch in Querrichtung, beispielsweise durch das bei einem gleichzeitigen Abwalzen in beide Richtungen gegebene Herausnehmen von Spannungen aus dem Teig, eine besonders schonende Teigbehandlung ermöglicht wird.

Deshalb ist die erfindungsgemäße Vorrichtung unter anderem geeignet zur Bearbeitung von sehr weichen Teigen, die sehr schonend bearbeitet werden müssen, somit zum Beispiel für Teige mit einer hohen Teigausbeute, also einem hohen relativen Maß für die aus 100 Teilen Mehl nach einer Mischung mit Wasser erhaltenen Menge Teig, einem hohen Wassergehalt bzw. einer langen Vorgarzeit.

Die Druckwalze der Querspreizeinrichtung kann erfindungsgemäß als zum wiederholten Eindrücken des Teigbands in Querrichtung von der Mitte hin zu den Rändern geeignete Schneckenwalze ausgebildet sein und/oder eine Geschwindigkeit und/oder Drehzahl des oder der Querspreizmittel und des oder der Mittel zum maschinellen Längsspreizen oder Längsstrecken des Teigbandes können unabhängig voneinander einstellbar sein, insbesondere unabhängig voneinander regelbar.

Eine Schnecken- oder Spiralwalze hat, wenn sie gedreht wird, den Effekt, dass das Teigband wiederholt von der Mitte zu den beiden bezüglich der Förderrichtung seitlichen Rändern hin eingedrückt wird. Durch diese von innen nach außen arbeitende Schnecke oder auch Spirale wird das Teigband quer bzw. schräg zu seiner Laufrichtung gespreizt. Die Schneckenwalze weist hierzu an ihrer Mantelfläche zweckmäßigerweise eine entsprechende gewinde- bzw. schneckenartige Erhöhung auf. Mit besonderem Vorteil sind die Mittel zum Längs- und Querspreizen (z.B. Walzen bzw. Rollen) unabhängig voneinander in der Drehzahl regelbar. Der Längs- und Querspreizvorgang sind somit separat voneinander einstellbar. Beispielsweise können auf einem Scheitel quer zur Laufrichtung des Teigs, der einen Zuführtisch mit einer Messerkante und eine Auslaufseite voneinander trennt, Mittel zum Längs- und Querspreizen angeordnet sein, die unabhängig voneinander in ihrer Drehzahl geregelt werden können.

Bei der erfindungsgemäßen Vorrichtung sind wenigstens eine Zuführeinrichtung und wenigstens eine Abführeinrichtung, insbesondere wenigstens ein Zuführ- und/oder Abführtisch, zur Beförderung des Teigbandes und/oder wenigstens eines im Rahmen der Teigverarbeitung benötigten Mittels vorgesehen. Insbesondere kann eine Zuführeinrichtung für das Teigband und eine weitere Zuführeinrichtung für wenigstens ein Mittel für die Teigbearbeitung vorgesehen sein. Außerdem kann wenigstens eine Zuführeinrichtung, vorrangig aus Gründen der Platzersparnis, einen messerkantenförmigen Auslaufbereich aufweisen.

Es kann also eine Zuführeinrichtung für das Teigband und wenigstens eine weitere Zuführeinrichtung für im Rahmen der Teigverarbeitung erforderliche Mittel, wie beispielsweise für dem Teig zuzuführende Bestandteile, ergänzende Zutaten bzw. Komponenten, vorgesehen sein. Außerdem können die Zuführeinrichtungen ergänzend zu ihrer reinen Beförderungsfunktion selbstverständlich Funktionen bei der direkten Teigbearbeitung erfüllen, beispielsweise als Förderbänder, die alleine oder im Zusammenwirken mit anderen Förderbändern einen bestimmten, gegebenenfalls wechselnden, Druck auf den Teig ausüben.

Zur Beförderung des Teigbandes und gegebenenfalls für die Teigverarbeitung benötigter Mittel, beispielsweise von Mehl, das mittels einer Streueinrichtung auf eine Zuführeinrichtung aufgebracht werden kann, können somit unterschiedliche Zuführeinrichtungen zum Einsatz kommen, wobei das fertig bearbeitete Teigband, also zum Beispiel das mit Mehl bestreute und längs- und quergewalzte Teigband, vorzugsweise über eine Abführeinrichtung wieder abtransportiert bzw. weitertransportiert wird.

Dabei werden die Zuführ- bzw. Abführeinrichtungen zum Beispiel wie erwähnt mit Förderbändern ausgebildet. Beispielsweise kann neben einem Zuführ-Förderband ergänzend ein weiteres Förderband vorgesehen sein, über das Mehl bzw. weitere Komponenten für die Teigverarbeitung zugeführt werden.

Zweckmäßigerweise sind wenigstens eine Zuführeinrichtung und wenigstens eine Abführeinrichtung in Abhängigkeit von der durch ein Spreizen in Längsrichtung bewirkten Verjüngung des Teigbandes mit unterschiedlichen Geschwindigkeiten betreibbar. Erfindungsgemäß besteht somit mit besonderem Vorteil eine Trennung an einer Ausrollstelle. Dadurch wird es möglich, eine Ausrolllinie zu definieren. Der Betrag der Änderung der Maße des Teigbands in Längsrichtung und in Querrichtung lässt sich durch eine Geschwindigkeits- bzw. Drehzahlregelung für die beteiligten Spreiz- und Streckmittel in einem beträchtlichen Umfang unabhängig voneinander einstellen. Trotz der Kombination des Längs- und Querspreizens in einer Vorrichtung sind also diese beiden Vorgänge unabhängig voneinander regelbar.

Durch den Betrieb mit unterschiedlichen Geschwindigkeiten ist es möglich, eine Differenzgeschwindigkeit zwischen dem bzw. einem Zuführtisch oder einer Zuführeinrichtung und einem Abführtisch bzw. einer Abführeinrichtung zu erzeugen. Wird beispielsweise ein Teig von einer ursprünglichen Dicke von 100 mm durch den Längsspreizvorgang auf 10 mm Dicke verjüngt, nimmt also die Dicke bedingt durch die Verlängerung des Teigbandes auf ein Zehntel ab, so muss zum Erhalt des Massenstroms ein Abführtisch mit der zehnfachen Geschwindigkeit eines Zuführtisches laufen. Die Berücksichtigung der durch das Längswalzen bedingten Dickenänderung bei der Einstellung der Geschwindigkeit der Fördereinrichtungen verhindert Stauungen des Teigbandes bzw. ein Abreißen und allgemein eine Schädigung des Teigs bei der Beförderung. Dabei ist gegebenenfalls für eine optimale Geschwindigkeitseinstellung auch eine (geringere) Verlängerung des Teigbandes zu berücksichtigen, die als Nebeneffekt beim Querwalzen auftritt.

Wenigstens eine Satellitenwalze der Satellitenkopfanordnung bzw. des Satellitenkopfaggregats der erfindungsgemäßen Vorrichtung kann an wenigstens einer, vorzugsweise in Förderrichtung des Teigbandes, drehbaren Drehscheibe und/oder an einem Drehgestell gelagert und/oder zum Abrollen auf dem Teigband ausgebildet sein, wobei vorzugsweise alle Walzen einheitlich gelagert sind.

Die Satellitenwalzen können also beispielsweise, um bestimmte, gegebenenfalls gleiche, Umfangswinkel gegeneinander versetzt, zwischen zwei Drehscheiben gelagert sein. Dabei können die Drehscheiben ihrerseits mit einem Antrieb verbunden sein, der eine Drehung der Drehscheiben mit einer bestimmten, vorzugsweise änderbaren, Geschwindigkeit ermöglicht. Wenn die Drehscheiben um ihre (gemeinsame) Drehachse gedreht werden, wobei die Rotationsrichtung so gewählt ist, dass sie an der dem Teigband zugewandten Seite der Drehscheiben der Förderrichtung des Teigbandes entspricht, rollen die einzelnen Walzen vorzugsweise ohne eigenen Antrieb auf dem Teig ab.

Ebenso ist es möglich, die Satellitenwalzen frei drehbar an einem Drehgestell zu lagern, das seinerseits zweckmäßigerweise mittels eines Antriebs in eine Drehbewegung versetzt wird.

Vorteilhafterweise können die Anzahl der Satellitenwalzen der Satellitenkopfanordnung und/oder deren Abstände zueinander und/oder die Geschwindigkeit einer Drehung der Satellitenkopfanordnung und/oder der Durchmesser der Satellitenwalzen bei der erfindungsgemäßen Vorrichtung veränderbar sein.

Die Veränderung dieser und gegebenenfalls weiterer, hier nicht genannter Eigenschaften bzw. Parameter der Vorrichtung bzw. der Längswalzeinrichtung der Vorrichtung beeinflusst die Art und Weise der Teigbearbeitung. Dadurch, dass die einzelnen Walzen einen bestimmten Abstand voneinander haben, wird ein gegebenenfalls über die Satellitenwalzen gezogenes Förderband bzw. ein über diese verlaufender Riemen in bestimmter Art und Weise ausgelenkt und dementsprechend das Teigband, je nach Geschwindigkeit des Satellitenkopfes, in unterschiedlicher Weise durch das aufeinanderfolgende Abrollen der Walzen bearbeitet. Typische Umlaufgeschwindigkeiten von Satellitenköpfen liegen im Bereich von 40 m/min, wobei selbstverständlich bei Bedarf andere, (gegebenenfalls deutlich) von diesem Wert abweichende Geschwindigkeiten gewählt werden können, wenn dadurch zum Beispiel in bestimmten Fällen eine bessere bzw. geeignetere Teigbehandlung erreicht werden kann.

Eine größere Anzahl von Satellitenwalzen bewirkt über einen einzelnen Umlauf des Satellitenkopfes ein häufigeres Abrollen von Walzen auf dem Teigband, während ein größerer Durchmesser die Abrolllänge für eine einzelne Rolle und gegebenenfalls die Tiefe des Eindrückvorgangs auf dem Teig verändert. Zur Änderung des Durchmessers können die einzelnen Rollen beispielsweise ausgetauscht werden bzw. auf ihrer Umfangsfläche mit einem Material geeigneter Dicke, zum Beispiel passenden Hohlzylindern, umgeben werden.

Die Satellitenkopfanordnung kann erfindungsgemäß dazu ausgebildet sein, das Teigband mit einer sich im Zeitablauf ändernden Bewegung und/oder Auslenkung und/oder einem sich ändernden Druck zu beaufschlagen, insbesondere mit einer sich kurzzeitig oder periodisch ändernden Bewegung und/oder Auslenkung und/oder einem sich kurzzeitig oder periodisch ändernden Druck.

Eine solche wechselnde Beaufschlagung des Teigbandes mit unterschiedlichen Bewegungen, Auslenkungen bzw. Drücken, bedingt durch die unterschiedlichen Auslenkungen der Satellitenkopfbestandteile relativ zum zu bearbeitenden Teigstück, kann alleine durch eine vorgegebene Abfolge des Abrollens der einzelnen Satellitenwalzen bedingt sein, die jeweils einen bestimmten Abstand zueinander aufweisen. Um gezielt eine bestimmte Bewegung bzw. einen bestimmten Druck auf das Teigband auszuüben, kann, wie vorstehend beschrieben, beispielsweise die Rotationsgeschwindigkeit des Satellitenkopfes geändert werden bzw. es wird ein bestimmter Walzenabstand für die einzelnen Satellitenwalzen gewählt oder die Anzahl der Walzen wird angepasst usw. Schließlich ist es auch denkbar, die Satellitenwalzen so am Satellitenkopf anzuordnen, dass sie, zum Beispiel mittels hierzu vorgesehener Stellanordnungen, aktiv auslenkbar sind.

Letztlich wird so eine Pulsation bzw. Vibration erzeugt bzw. eingeleitet, die, insbesondere im Vergleich zu bisherigen Querwalzwerken, bei denen lediglich eine starre Gegenwalze vorgesehen ist, eine besonders schonende Teigbehandlung ermöglicht. Besonders vorteilhaft ist dabei die Möglichkeit, durch eine Schneckenwalze bzw. Spiralwalze des Querwalzwerks, die von unten auf das Teigband einwirkt, im Zusammenspiel mit einem von oben einwirkenden Satellitenkopf sowohl von unten als auch von oben eine Pulsation bzw. Vibration einleiten zu können. Dadurch ist eine Erhöhung des Abwalzgrades möglich, der Teig wird also besonders schnell ausgewalzt bzw. verdünnt.

Die Satellitenwalzen des Satellitenkopfes können auf ihrer Außenseite mit einem gegebenenfalls über mehrere Satellitenwalzen verlaufenden Riemen oder Band umgeben sein. Ein solcher über die Satellitenwalzen verlaufender Riemen bzw. ein über diese verlaufendes (Förder-) Band hat die Wirkung, dass nicht mehr die Walzen direkt in Kontakt mit dem Teig treten, sondern indirekt über den Riemen bzw. das Band auf dem Teig abrollen, und zudem auch in den Zwischenräumen zwischen zwei Satellitenwalzen über den Riemen bzw. das Band ein Einwirken auf den Teig erfolgen kann. Dabei wird das Teigband im Zwischenbereich zwischen zwei Walzen bei geeigneter Führung des Bandes weniger stark eingedrückt, da ein entsprechend gespannter, über Umlenkrollen geführter Riemen in diesem Bereich nicht so weit nach unten reicht, wodurch die bereits beschriebene Pulsationsbewegung erzeugt wird. der Zwischenbereich zwischen den einzelnen Walzen kann durch die Verwendung eines solchen Riemens bzw. Bandes von Teigpartikeln frei gehalten werden.

Darüber hinaus betrifft die Erfindung ein Verfahren zur maschinellen Teigverarbeitung mit einer Querstreck- oder Querspreizeinrichtung, ausgebildet mit einem oder mehreren Querspreizmitteln sowie einem oder mehreren, diesen gegenüberliegend angeordneten Gegenhaltmitteln zum maschinellen Querspreizen eines Teigbands bezüglich einer Förderrichtung des Teigbandes, bei dem das Teigband in einem Verarbeitungsschritt und/oder gleichzeitig sowohl quergespreizt oder quergestreckt als auch unter Verwendung des oder der Gegenhaltmittel längsgespreizt oder langgestreckt wird (z.B. mittels einer als zum maschinellen Längsspreizen des Teigbandes geeigneten Satellitenkopfanordnung mit mehreren Satellitenwalzen ausgebildeten Gegenwalze der Querspreizeinrichtung).

Mit dem erfindungsgemäßen Verfahren besteht somit die Möglichkeit eines gleichzeitigen Quer- und Längswalzens. Durch die Kombination des Längs- und Querwalzens, also einer Abwalzfunktion in zwei Richtungen, zu einem einzigen Vorgang, ist es mit dem erfindungsgemäßen Verfahren möglich, Spannung aus dem zu bearbeitenden Teig herauszunehmen und so eine besonders schonende Teigbehandlung zu realisieren. Als Mittel zum maschinellen Längsspreizen oder Längsstrecken des Teigbandes kann wenigstens eine Satellitenkopfanordnung mit mehreren Satellitenwalzen verwendet werden und/oder das Teigband kann, insbesondere in einem Verarbeitungsschritt und/oder gleichzeitig mit dem Spreizen bzw. Strecken, vibriert und/oder wiederholt mechanisch gedrückt oder geschlagen werden, insbesondere mittels wenigstens einer Satellitenkopfanordnung mit mehreren Satellitenwalzen und/oder anderer geeigneter Mittel.

Dabei kann die hierzu zweckmäßigerweise als Schneckenwalze ausgebildete Druckwalze der Querspreizeinrichtung das Teigband wiederholt in Querrichtung von der Mitte hin zu den Rändern eindrücken. Durch die Verwendung einer derartigen Schneckenwalze oder Spiralwalze wird bei deren Rotation von unten eine auf das Teigband wirkende Vibration bzw. Pulsation erzeugt. Das Teigband wird somit im Sinne einer flexiblen Teigbearbeitung über die Zeit unterschiedlich eingedrückt, wobei sich dieser Vorgang bei einer gleichmäßigen Rotation periodisch wiederholt. Weiterhin können eine Geschwindigkeit und/oder Drehzahl des oder der Querspreizmittel und des oder der Mittel zum maschinellen Längsspreizen oder Längsstrecken des Teigbandes unabhängig voneinander eingestellt werden, insbesondere unabhängig voneinander geregelt werden. Die Mittel zum Längs- und Querspreizen lassen sich somit hinsichtlich des gewünschten Ergebnisses unabhängig voneinander einstellen.

Weiterhin können das Teigband und/oder wenigstens ein im Rahmen der Teigverarbeitung benötigtes Mittel mittels wenigstens einer Zuführeinrichtung und wenigstens einer Abführeinrichtung, insbesondere mittels wenigstens eines Zuführ- und/oder Abführtisches, befördert werden. Insbesondere können das Teigband mittels einer Zuführeinrichtung und wenigstens ein Mittel für die Teigverarbeitung mittels wenigstens einer weiteren Zuführeinrichtung befördert werden und/oder das Teigband kann über wenigstens einen messerkantenförmigen Auslaufbereich einer Zuführeinrichtung auslaufen.

Wenigstens eine Zuführeinrichtung und wenigstens eine Abführeinrichtung können in Abhängigkeit von der durch das Längsspreizen bewirkten Verjüngung bzw. Dickenänderung des Teigbandes mit unterschiedlichen Geschwindigkeiten betrieben werden.

Durch den Betrieb mit unterschiedlichen Geschwindigkeiten wird eine Differenzgeschwindigkeit zwischen dem Zuführ- und dem Abführvorgang erzeugt. Diese Geschwindigkeitsdifferenz wird zur Vermeidung von Stauungen beim Teigtransport bzw. zur Vermeidung eines Abreißens des Teiges so gewählt, dass der auf den Teigtransport bezogene Massenstrom erhalten ist.

Die Satellitenwalzen des Satellitenkopfesaggregats können beim erfindungsgemäßen Verfahren an wenigstens einer in Förderrichtung des Teigbandes drehbaren Drehscheibe, insbesondere zwischen zwei Drehscheiben, und/oder an einem Drehgestell gelagert werden und/oder auf dem Teigband abrollen. Vorzugsweise werden dabei die Drehscheiben bzw. das Drehgestell über einen Antrieb in der Transportrichtung des Teiges angetrieben, während die einzelnen Satelliten lediglich ohne eigenen Antrieb auf dem Teig abrollen.

Beim erfindungsgemäßen Verfahren können die Anzahl der Satellitenwalzen des Satellitenkopfes und/oder deren Abstände zueinander und/oder die Geschwindigkeit einer Drehung der Satellitenkopfanordnung und/oder der Durchmesser der Satellitenwalzen verändert werden. Diese Anpassungen bzw. Veränderungen können vorgenommen werden, um je nach Art des zu bearbeitenden Teiges in geeigneter Weise auf diesen einzuwirken, also die Art der Teigverarbeitung anzupassen und insbesondere eine schonende Teigbehandlung zu gewährleisten.

Das Teigband kann mittels der Satellitenkopfanordnung mit einer sich im Zeitablauf ändernden Bewegung und/oder Auslenkung und/oder einem sich im Zeitablauf ändernden Druck beaufschlagt werden, insbesondere mit einer sich kurzzeitig oder periodisch ändernden Bewegung und/oder Auslenkung und/oder einem sich kurzzeitig oder periodisch ändernden Druck. So wird, gegebenenfalls durch eine Anpassung der vorstehend beschriebenen Parameter wie der Drehgeschwindigkeit des Satellitenkopfs, nicht nur von unten (durch die Schneckenwalze), sondern auch von oben über den Satellitenkopf eine pulsierende Bewegung auf den Teig ausgeübt, sodass der Teig im Vergleich zu bisherigen Querwalzeinrichtungen nicht mehr so starr eingespannt wird und zudem bei schonenderer Teigbehandlung der Querwalzvorgang unterstützt wird.

Die Satellitenwalzen der Satellitenkopfanordnung können auf ihrer Außenseite mit einem gegebenenfalls mehrere Satellitenwalzen umspannenden, zum Beispiel über Umlenkrollen geführten, Riemen oder Band umgeben werden, über das die Rollen indirekt auf dem Teig abrollen. Der über einige oder alle Walzen gezogene Riemen bzw. ein über die Satellitenwalzen verlaufendes (Förder-) Band ermöglichen insbesondere die Übertragung einer gewünschten Pulsation bzw. Vibration auf den Teig.

Weitere Vorteile, Merkmale und Einzelheiten der Erfindung ergeben sich anhand des folgenden, in den Figuren gezeigten Ausführungsbeispiels.

Dabei zeigen:
- Fig. 1: eine Prinzipskizze einer erfindungsgemäßen Vorrichtung zur maschinellen Teigverarbeitung im Längsschnitt und
- Fig.2: einen Querschnitt der Vorrichtung nach Figur 1.

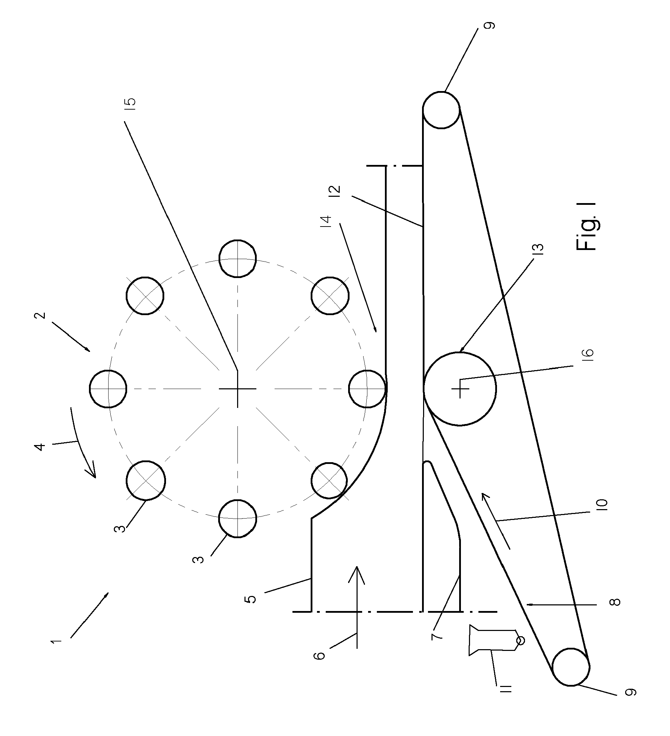

Figur 1 zeigt in Form einer Prinzipskizze einen Längsschnitt einer erfindungsgemäßen Vorrichtung 1 zur maschinellen Teigverarbeitung mit einer Satellitenkopfanordnung 2, die mehrere, hier mit gleichen Abständen angeordnete Satellitenwalzen 3 aufweist, die in diesem Ausführungsbeispiel an einem nicht näher gezeigten Drehgestell angeordnet sind, aber in anderen Ausführungsbeispielen ebenso zum Beispiel zwischen zwei Drehscheiben gelagert sein können.

Der Satellitenkopf 2 rotiert mit einer bestimmten Geschwindigkeit, hier angedeutet durch den Pfeil 4, wobei die Rotationsrichtung auf der dem Teigband 5 zugewandten Seite der Transportrichtung des Teigbandes 5 entspricht, die hier durch den Pfeil 6 angegeben ist. Die Satellitenwalzen 3 rollen dabei ohne eigenen Antrieb auf dem Teigband 5 ab.

In anderen Ausführungsbeispielen kann ein über die Außenseiten der unteren, zum Abrollen auf dem Teigband 5 vorgesehenen Satellitenwalzen 3 gezogener, über eigene Umlenkrollen geführter Riemen, über den der Kontakt zum Teigband 5 hergestellt wird, verwendet werden.

Das Teigband 5 wird mittels einer Zuführeinrichtung 7 in Richtung auf die Satellitenkopfanordnung 2 transportiert. Darüber hinaus ist ein Förderband 8 vorgesehen, das über Antriebs- bzw. Umlenkrollen 9 geführt und in Richtung des Pfeils 10 bewegt wird. Das Förderband 8 dient unter anderem der Zufuhr von Mehl aus einer Mehlstreueinrichtung 11 und in einem hinteren Bereich 12 als Abführtisch für das fertig bearbeitete Teigband 5.

In einem Bereich unterhalb der Satellitenkopfanordnung 2 wird das Förderband 8 über eine Schneckenwalze 13 geführt, sodass sich in diesem Bereich zwischen dem Förderband 8 und der Satellitenkopfanordnung 2 mit den einzelnen Satellitenwalzen 3 ein Teigformspalt 14 ausbildet.

Mittels der Schneckenwalze 13 wird das Teigband 5 quergewalzt, während gleichzeitig über den Satellitenkopf 2 im gleichen Verarbeitungsschritt ein Längswalzen erreicht wird. Damit stellt die Vorrichtung 1 eine integrierte Längs- und Querwalzeinrichtung dar, die im Unterschied zu bisherigen Vorrichtungen, bei denen Quer- und Längswalzwerke stets hintereinander geschaltet bzw. angeordnet wurden, eine deutlich geringere Baulänge aufweist.

Die durch die Verwendung der unterseitigen Schneckenwalze 13 in Verbindung mit der oberseitigen Satellitenkopfanordnung 2 mögliche Einleitung von Pulsationen auf das Teigband 5 sowohl von oben als auch von unten ermöglicht es, Spannung aus dem Teigband 5 herauszunehmen und so den Teig schonend zu behandeln.

Die Verjüngung des Teigbandes 5durch den Walzvorgang muss, insbesondere im Hinblick auf die durch den Längswalzvorgang auftretende Streckung in Längsrichtung, beim Transport berücksichtigt werden, sodass die Zuführeinrichtung 7 im Vergleich zum Förderband 8 mit einer derart niedrigeren Geschwindigkeit angetrieben wird, dass der Massenstrom für das Teigband 5 erhalten ist.

Die Drehachsen der Satellitenkopfanordnung 2 sowie der Schneckenwalze 13 sind jeweils durch die Kreuze 15 und 16 angedeutet.

Selbstverständlich können andere, hier nicht gezeigte Ausführungsbeispiele gegebenenfalls so ausgestaltet sein, dass eine Schneckenwalze oberhalb des Teigbandes angeordnet ist, während unterhalb eine Satellitenkopfanordnung vorgesehen ist.

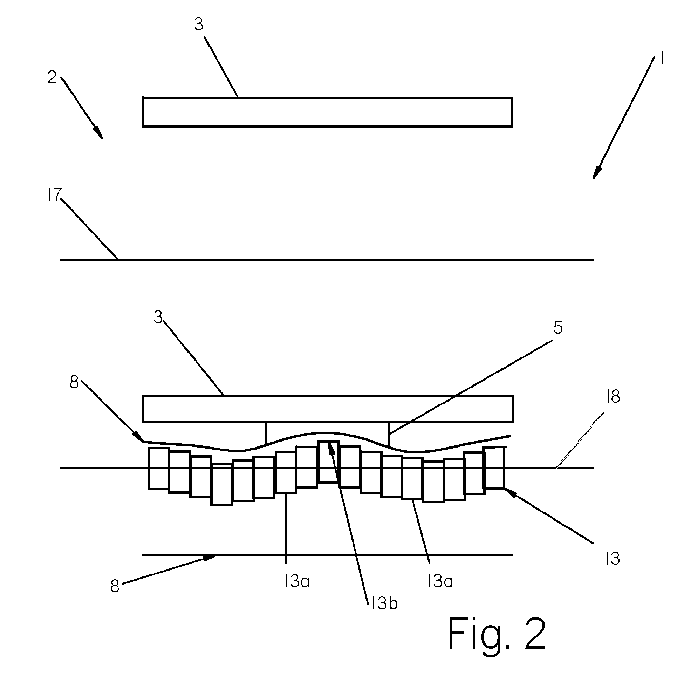

Figur 2 zeigt in Form einer Skizze einen Querschnitt der Vorrichtung 1 gemäß Figur 1 auf der Höhe der in der Figur 1 durch die Kreuze 15 und 16 angedeuteten Drehachsen 17 und 18 der Satellitenkopfanordnung 2 bzw. der Schneckenwalze 13.

Von der Satellitenkopfanordnung 2 sind in der Figur 2 zwei Satellitenwalzen 3 zu sehen, von denen sich eine gerade im Kontakt mit dem Teigband 5 befindet. Mittels dieser und der weiteren, hier nicht erkennbaren Satellitenwalzen 3 der Satellitenkopfanordnung 2 wird ein Längsspreizen des Teigbands 5 bewirkt, während über die Schneckenwalze 13 mit ihren einzelnen Elementen 13a, die derart angeordnet sind, dass zur Mitte des Teigbandes 6 hin eine Erhöhung 13b ausgebildet wird, parallel dazu ein Querspreizen erfolgt. Die beiden Walzvorgänge erfolgen somit bei der erfindungsgemäßen Vorrichtung 1 in einem einzigen Arbeitsschritt. Dadurch verkürzt sich die erforderliche Baulänge der Vorrichtung 1 signifikant.

### Bezugszeichenliste

- 1: Vorrichtung zur maschinellen Teigverarbeitung
- 2: Satellitenkopfanordnung
- 3: Satellitenwalzen
- 4: Pfeil
- 5: Teigband
- 6: Pfeil
- 7: Zuführeinrichtung
- 8: Förderband
- 9: Antriebs- bzw. Umlenkrollen
- 10: Pfeil
- 11: Mehlstreueinrichtung
- 12: hinterer Bereich
- 13: Schneckenwalze
- 13a: Element Schneckenwalze
- 13b: Erhöhung Schneckenwalze
- 14: Teigformspalt
- 15: Kreuz
- 16: Kreuz
- 17: Drehachse
- 18: Drehachse

## Patentansprüche

1. Vorrichtung (1) zur maschinellen Teigverarbeitung mit einer Querspreizeinrichtung, ausgebildet mit einem oder mehreren Querspreizmitteln sowie einem oder mehreren, diesen gegenüberliegend angeordneten Gegenhaltmitteln zum maschinellen Querspreizen beziehungsweise -strecken eines Teigbandes (5) bezüglich einer Förderrichtung des Teigbandes (5), **dadurch gekennzeichnet, dass** das oder die Gegenhaltmittel der Querspreizeinrichtung ein oder mehrere Mittel zum maschinellen Längsspreizen oder Längsstrecken des Teigbandes (5) umfassen.

2. Vorrichtung (1) nach Anspruch 1, **dadurch gekennzeichnet, dass** das oder die Querspreizmittel mit einer Schneckenwalze (13) oder sonstigen Druckwalze realisiert sind, die zum wiederholten Eindrücken des Teigbands (5) von der Mitte in Querrichtung hin zu den Rändern ausgebildet ist, und/oder dass eine Geschwindigkeit und/oder Drehzahl des oder der Querspreizmittel und des oder der Mittel zum maschinellen Längsspreizen oder Längsstrecken des Teigbandes (5) unabhängig voneinander einstellbar sind, insbesondere unabhängig voneinander regelbar.

3. Vorrichtung nach Anspruch 1 oder 2, **dadurch gekennzeichnet, dass** das oder die Mittel zum maschinellen Längsspreizen oder Längsstrecken des Teigbandes (5) mit wenigstens einer Satellitenkopfanordnung (2) mit mehreren Satellitenwalzen (3) realisiert sind und/oder dass das oder die Gegenhaltmittel der Querspreizeinrichtung ein oder mehrere Mittel zum Vibrieren des Teigbandes (5) und/oder zum wiederholten mechanischen Drücken oder Schlagen des Teigbandes (5), insbesondere mit wenigstens einer Satellitenkopfanordnung (2) mit mehreren Satellitenwalzen (3), umfassen.

4. Vorrichtung (1) nach einem der vorangehenden Ansprüche, **dadurch gekennzeichnet, dass** wenigstens eine Zuführeinrichtung (7) und wenigstens eine Abführeinrichtung, insbesondere wenigstens ein Zuführ- und/oder Abführtisch, zur Beförderung des Teigbandes (5) und/oder wenigstens eines im Rahmen der Teigverarbeitung benötigten Mittels vorgesehen sind.

5. Vorrichtung (1) nach Anspruch 4, **dadurch gekennzeichnet, dass** eine Zuführeinrichtung (7) für das Teigband (5) und eine weitere Zuführeinrichtung (7) für wenigstens ein im Rahmen der Teigverarbeitung benötigtes Mittel vorgesehen sind und/oder dass wenigstens eine Zuführeinrichtung (7) einen messerkantenförmigen Auslaufbereich aufweist.

6. Vorrichtung (1) nach einem der Ansprüche 4 oder 5, **dadurch gekennzeichnet, dass** wenigstens eine Zuführeinrichtung (7) und wenigstens eine Abführeinrichtung in Abhängigkeit von einer durch ein Spreizen in Längsrichtung bewirkten Verjüngung des Teigbandes (5) mit unterschiedlichen Geschwindigkeiten betreibbar sind.

7. Vorrichtung (1) nach einem der vorangehenden Ansprüche, **dadurch gekennzeichnet, dass** wenigstens eine Satellitenwalze (3) der Satellitenkopfanordnung (2) an wenigstens einer, vorzugsweise in Förderrichtung des Teigbandes (5), drehbaren Drehscheibe und/oder an einem Drehgestell gelagert und/oder zum Abrollen auf dem Teigband (5) ausgebildet ist.

8. Vorrichtung (1) nach einem der vorangehenden Ansprüche, **dadurch gekennzeichnet, dass** die Anzahl der Satellitenwalzen (3) der Satellitenkopfanordnung (2) und/oder deren Abstände zueinander und/oder die Geschwindigkeit einer Drehung der Satellitenkopfanordnung (2) und/oder der Durchmesser der Satellitenwalzen (3) veränderbar sind.

9. Vorrichtung (1) nach einem der vorangehenden Ansprüche, **dadurch gekennzeichnet, dass** die Satellitenkopfanordnung (2) dazu ausgebildet ist, das Teigband (5) mit einer sich im Zeitablauf ändernden Bewegung und/oder Auslenkung und/oder einem sich im Zeitablauf ändernden Druck zu beaufschlagen, insbesondere mit einer sich kurzzeitig oder periodisch ändernden Bewegung und/oder Auslenkung und/oder einem sich kurzzeitig oder periodisch ändernden Druck.

10. Vorrichtung (1) nach einem der vorangehenden Ansprüche, **dadurch gekennzeichnet, dass** wenigstens eine Satellitenwalze (3) der Satellitenkopfanordnung (3) zum indirekten Abrollen auf dem Teigband (5) auf ihrer Außenseite mit einem Riemen oder Band umgeben ist.

11. Verfahren zur maschinellen Teigverarbeitung mit einer Querstreck- oder Querspreizeinrichtung, ausgebildet mit einem oder mehreren Querspreizmitteln sowie einem oder mehreren, diesen gegenüberliegend angeordneten Gegenhaltmitteln zum maschinellen Querspreizen eines Teigbands (5) bezüglich einer Förderrichtung des Teigbandes (5), **dadurch gekennzeichnet, dass** das Teigband (5) in einem Verarbeitungsschritt und/oder gleichzeitig sowohl quergespreizt oder quergestreckt als auch unter Verwendung des oder der Gegenhaltmittel längsgespreizt oder langgestreckt wird.

12. Verfahren nach Anspruch 11, **dadurch gekennzeichnet, dass** als Querspreizmittel eine Schneckenwalze (13) zum wiederholten Eindrücken des Teigbands (5) von der Mitte in Querrichtung hin zu den Rändern verwendet wird und/oder dass eine Geschwindigkeit und/oder Drehzahl des oder der Querspreizmittel und des oder der Mittel zum maschinellen Längsspreizen oder Längsstrecken des Teigbandes (5) unabhängig voneinander eingestellt werden, insbesondere unabhängig voneinander geregelt werden.

13. Verfahren nach Anspruch 11 oder 12, **dadurch gekennzeichnet, dass** als Mittel zum maschinellen Längsspreizen oder Längsstrecken des Teigbandes (5) wenigstens eine Satellitenkopfanordnung (2) mit mehreren Satellitenwalzen (3) verwendet wird und/oder dass das Teigband, insbesondere in einem Verarbeitungsschritt und/oder gleichzeitig, vibriert und/oder wiederholt mechanisch gedrückt oder geschlagen wird, insbesondere mittels wenigstens einer Satellitenkopfanordnung (2) mit mehreren Satellitenwalzen (3).

14. Verfahren nach einem der vorangehenden Ansprüche, **dadurch gekennzeichnet, dass** das Teigband (5) und/oder wenigstens ein im Rahmen der Teigverarbeitung benötigtes Mittel mittels wenigstens einer Zuführeinrichtung (7) und wenigstens einer Abführeinrichtung, insbesondere mittels wenigstens eines Zuführ- und/oder Abführtisches, befördert werden.

15. Verfahren nach Anspruch 14, **dadurch gekennzeichnet, dass** das Teigband (5) mittels einer Zuführeinrichtung (7) und wenigstens ein im Rahmen der Teigverarbeitung benötigtes Mittel mittels wenigstens einer weiteren Zuführeinrichtung befördert werden und/oder dass das Teigband (5) über wenigstens einen messerkantenförmigen Auslaufbereich einer Zuführeinrichtung ausläuft und/oder dass wenigstens eine Zuführeinrichtung (7) und wenigstens eine Abführeinrichtung in Abhängigkeit von einer durch ein Spreizen in Längsrichtung bewirkten Verjüngung des Teigbandes (5) mit unterschiedlichen Geschwindigkeiten betrieben werden.

16. Verfahren nach einem der vorangehenden Ansprüche 11 bis 15, **dadurch gekennzeichnet, dass** wenigstens eine Satellitenwalze (3) der Satellitenkopfanordnung (2) an wenigstens einer, vorzugsweise in Förderrichtung des Teigbandes (5), drehbaren Drehscheibe und/oder an einem Drehgestell gelagert wird und/oder auf dem Teigband (5) abrollt und/oder dass die Anzahl der Satellitenwalzen (3) der Satellitenkopfanordnung (2) und/oder deren Abstände zueinander und/oder die Geschwindigkeit einer Drehung der Satellitenkopfanordnung (2) und/oder der Durchmesser der Satellitenwalzen (3) im Rahmen einer Anpassung der Teigverarbeitung verändert werden.

17. Verfahren nach einem der Ansprüche 11 bis 16, **dadurch gekennzeichnet, dass** das Teigband (5) mittels der Satellitenkopfanordnung (2) mit einer sich im Zeitablauf ändernden Bewegung und/oder Auslenkung und/oder einem sich im Zeitablauf ändernden Druck beaufschlagt wird, insbesondere mit einer sich kurzzeitig oder periodisch ändernden Bewegung und/oder Auslenkung und/oder einem sich kurzzeitig oder periodisch ändernden Druck und/oder dass wenigstens eine Satellitenwalze (3) der Satellitenkopfanordnung (2) zum indirekten Abrollen auf dem Teigband (5) auf ihrer Außenseite mit einem Riemen oder Band umgeben wird.
